# EUROPEAN PATENT SPECIFICATION

(11) **EP 1 604 123 B1**
(45) Date of publication and mention of the grant of the patent: **11.06.2008**
(21) Application number: 04719507.8
(22) Date of filing: 11.03.2004
(51) Int. Cl.: F16B 13/08, F16B 13/06

(54) **A FASTENING DEVICE**
BEFESTIGUNGSVORRICHTUNG
DISPOSITIF DE FIXATION

(30) Priority: 17.03.2003 GB 0306060
(43) Date of publication of application: 14.12.2005
(73) Proprietor: RICARDO UK LIMITED, Shoreham-by-Sea, West Sussex BN43 5FG (GB)
(72) Inventor: THOMPSON, David, Ian, Worthing, West Sussex BN11 4RZ (GB)
(74) Representative: Jennings, Nigel Robin
(86) International application number: PCT/GB2004/000984
(87) International publication number: WO 2004/083654

(56) References cited:
- DE-A- 10 015 202
- US-A- 3 523 482
- US-A- 4 246 688
- US-A1- 2003 017 024

## Description

The present invention relates to a fastening device, particularly for fastening metal to metal connections, and more particularly to a device for fastening together two pieces of material in which mating holes are formed, such as two metallic automotive components.

A fastener according to the preamble of claim 1 is known from US-A-3 523 482.

For example, an automobile engine has a sump cover that requires fixing securely to the engine block in order to contain oil inside the sump without any leakage. Usually this is achieved by drilling and tapping a large number of bores around the perimeter of an opening in the engine block and drilling corresponding holes through the sump cover. Bolts are inserted through the holes in the cover and through corresponding holes in a gasket and then screwed into each bore. The screwing in of each bolt is hand started and then finished by machine.

Although a secure connection is obtained, there are several problems associated with this practice. A typical sump cover can be fixed to an engine block using 30 or more bolts. It is both time consuming and expensive to drill and tap a hole for each bolt and then to screw each bolt in and have it machine tightened. When the sump requires servicing it is equally difficult to remove the threaded bolts, which over time can become stuck in place.

It is an object of the present invention to alleviate these problems in a simple and effective manner.

According to the invention, a fastening device for retention in a hole comprises an elongate shank with a head and a threaded portion in screw threaded engagement with a cylindrical retainer member, in at least part of whose outer surface there is an annular recess, the depth of which increases in the direction towards the head, the recess accommodating an expansible member whose internal surface engages the surface of the recess and which extends out of the recess.

The fastening device can be used in place of conventional bolts for fastening together metallic automotive components. The shank is threadable into the cylindrical retainer member, the outer surface of which is not tapped but includes a tapered recess. The expansible member is fitted in the recess and the device is then inserted with a certain amount of force through a hole in one component into a bore in the other component. When the force is removed, the shank will move a certain distance in the direction out of the bore, e.g. as one or other component or a gasket interposed between them expands slightly, and this movement of the shank will cause the tapering surface of the base of the recess in its outer surface to engage the expansible member and cause it to expand into locking contact with the wall of the bore, thereby locking the two components together.

An advantage of the fastening device is that the retainer member slides into the bore. Thus each bore can be plainly drilled and does not require tapping. This is both a cost saving and a labour saving over conventional threaded bolts. The fastening device is easily installed and locked in position, since no rotation is necessary.

Optional features of the invention are set out in the dependent claims. A spring preferably engages the shank in the vicinity of the head and is adapted to engage the margin of the hole and urge the shank in the direction out of the hole. The shank requires loading in order to lock the fastening device into place, and the spring can therefore be used to ensure that the load urging the shank in the direction out of the bore is sufficient if the resilience provided by the cover and gasket, where present, is not sufficient.

The expansible member of the fastening device is preferably a metallic ring, preferably in the form of a split ring. Metal, such as spring steel, is resilient enough when formed as a split ring for the ring to be resiliently expansible, yet it also is very tough. Thus, the ring is able to dig into the sides of the bore for locking the fastening device into place and remaining locked over long periods of time.

The surface of the recess is preferably frustoconical and the internal surface of the ring may also be frustoconical and complementary to the recess surface. This is preferred as the ring can tighten against the tapered surface of the cylindrical retainer recess whilst being maintained in a symmetrical position with respect to the axis of the shank as the shank is unloaded after insertion into the bore. The angles of inclination of the ring internal surface and of the recess tapered surface preferably complement each other so that a close fit can be ensured between the two components. The external surface of the ring preferably has a sharp outer edge at the end of the ring directed toward the shank head. Thus as the ring expands around the widening taper upon unloading of the shank, the outermost edge of the ring external surface digs into the bore surface for locking engagement therewith.

The shank may comprise longitudinally spaced ribs for engagement with the margin of a hole in the spring. The ribs enable the spring to engage the shank for urging the shank out of the bore.

The fastening device is preferably used for fastening together two metallic automobile components such as a sump and a sump cover. Significant savings can be made in using the fastening device for such an application that requires many such fastenings.

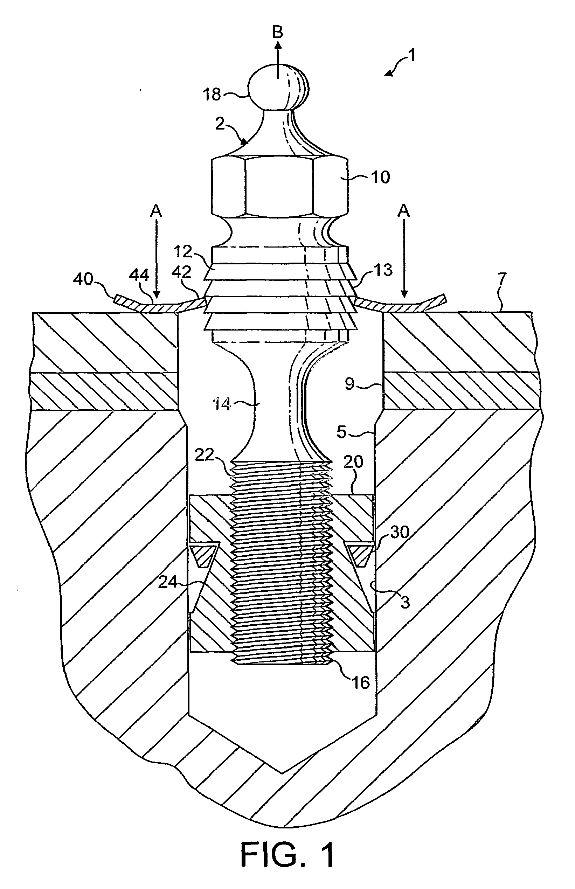

The present invention will now be explained in more detail by the following non-limiting description of a preferred embodiment and with reference to the accompanying drawing in which:-
Fig.1 is a schematic cross-section of a fastening device according to the invention when in situ fastening a sump cover to an engine block.

Fig.1 shows a fastening device 1 comprising a shank 2 inside a bore 3 in an engine block 5. The shank 2 comprises an elongate member having a head portion 10 at one end thereof, a ribbed portion 12 adjacent to the head portion, a necked portion 14 and a threaded portion 16 extending away from the head portion 10. The head portion 10 includes a handgrip 18 for use in installing the shank 2 in the bore 3.

The fastening device 1 also comprises a cylindrical retainer member 20 that is of a length that may be slightly shorter than the threaded portion 16 of the shank 2. The cylindrical retainer member 20 has a diameter that is substantially the same as that of the bore 3 into which it is to be installed such that the cylindrical retainer member 20 fits closely inside the bore.

The cylindrical retainer member 20 is of a generally annular cross-section. At least part of the inner surface of the retainer member 20 is in threaded engagement with the threaded portion 16 of shank 2. The outer surface of retainer member 20 includes a tapered recess 24 that extends over at least part of its length. The tapered recess has a depth that increases towards the end of the retainer member 20 that is closest to the head 10 of shank 2.

The fastening device further comprises an expansible split ring 30. The expansible ring 30 preferably has a regular trapezoidal cross-section such that its side surfaces are inclined away from each other at the upper surface of the ring 30 as shown in Fig.1. The ring 30 has a gap (not shown) at one point in its circumference so that the size of the ring 30 may be expanded by moving its two free ends apart. The expansible ring 30 is thus preferably manufactured from spring steel such that the ring 30 has the desired properties of toughness and flexibility whilst being hard-wearing. However, any other such suitable material could be used. The upper outer edge of the ring is defined by two surfaces which extend at less than 90°, preferably about 70°, to each other and is thus relatively "sharp" and thus capable of deforming, that is to say digging into, the surface of the bore.

The fastening device also includes a spring 40. In this embodiment of the invention, the spring is of a plate spring type and has a central aperture in which the ribbed portion of the shank 12 is received. The spring 40 has a thin elongate cross-section that is bent upwards at the inner 42 and outer edges of the cross-section as shown in Fig.1. The centre portion 44 of the ring cross-section remains flat. The thickness of the spring 40 is just sufficient to enable the inner edge 42 to engage between two ribs of the ribbed portion 12 of shank 2.

The fastening device 1 is shown fastening a metal sump cover 7 to an engine block 5, with the interposition of a sealing gasket 9. The bore 3 in the vessel 5 is a plain bore and requires no tapping. The cover 5 and gasket 9 contain holes that correspond to each of the bores 3.

The fastening device 1 is used by first threading the cylindrical retainer member 20 over the threaded shank portion 16 of the shank 2. The ring 30 is fitted around the retainer member 20, so that it sits in the tapered recess 24. The inclined inner surface of the ring 30 engages to the surface of tapered recess 24 towards the upper end of the recess. Cover 7 and gasket 9 are placed over the bore 3 so that the holes in the components are aligned. Spring 40 is fitted over the ribbed portion of shank 2 so that its inner portion 42 engages between two ribs thereof. The shank 2, with retainer member 20 and ring 30 are then forcibly inserted through the holes in the cover 7 and gasket 9 and into the bore 3. The force of insertion of the fastening device 1 loads the device in direction 'A' as shown in Fig. 1. When the fastening device is fully inserted into bore 3, the flat portion 44 of spring 40 rests on top of the cover 7 and the spring is deformed and urges the shank in the direction out of the hole. A rib 13 of the ribbed portion 12 of shank 2 bears against the spring 40. The handgrip 18 is then released.

The spring 40 provides a resilient force against the compressive force in direction 'A' on the shank 2 such that when the user releases the load on hand grip 18, the fastening device 1 is moved a small distance out of the bore 3 in direction 'B' as shown in Fig.1. This causes cylindrical retainer member 20 to move vertically upwards, its tapered recess 24 mating against the inner surface of ring 30 and forcing the ring 30 to expand. Consequently, as the gap between cylindrical retainer member 20 and the bore 3 decreases, the outer surface of ring 30 digs into the surface of the bore 3, thereby preventing further outward movement of the shank and locking the fastening device 1 in place.

In certain applications of the fastening device 1, the cover 7 and gasket 9 provide enough resilience against the load applied to shank 2 in direction 'A' to bias the fastening device 1 out of the bore 3 surfficiently without the need for spring 40 to be used. In this case, a metallic plate having a suitable aperture (not shown) replaces the spring 40 to provide a surface against which the ribs 13 of the ribbed portion 12 can locate. Alternatively, the head 10 is enlarged so that it will engage the margin of the hole, in which event the fastening device will resemble a conventional bolt. In use, the bolt is simply inserted into the hole and rotated, e.g. by one turn, and this is sufficient to lock it in position.

The fastening device 1 is removable in a conventional manner by unscrewing the shank 2 out of the retainer 20. In this event, the retainer and ring may be loose in the hole and may be removed separately for re-use or they may remain fixed in position by virtue of the fact that the ring has deformed the wall of the bore, in which case it may simply be re-used when the shank is reinserted.

Various modifications may be made to the embodiment described without departing from the scope of the invention as defined by the following claims.

## Claims

1. A fastening device for retention in a hole (3) comprising an elongate shank (2) with a head (10) and a threaded portion (16) in screw threaded engagement with a cylindrical retainer member (20), in at least part of whose outer surface there is an annular recess (24), the depth of which increases in the direction towards the head (10), the recess (24) accommodating an expansible member (30) whose internal surface engages the surface of the recess (24) and which extends out of the recess (24), **characterised in that** the fastening device further having a spring (40) engaging the shank (2) in the vicinity of the head (10) that is adapted to engage the margin of the hole (3) and urge the shank (2) in the direction out of the hole.

2. A fastening device as claimed in claim 1 in which the expansible member (30) is a metallic ring.

3. A fastening device as claimed in claim 2 in which the ring (30) comprises a split ring. :

4. A fastening device as claimed in any preceding claim in which the surface of the recess (24) is frustoconical.

5. A fastening device as claimed in claim 2 in which the internal surface of the ring (30) is frustroconical and complementary to the surface of the recess (24).

6. A fastening device as claimed in claim 3 in which the outer edge of the ring (30) at the end directed toward the head (10) is defined by two surfaces which extend at less than 90° to each other.

7. A fastening device as claimed in any one of the preceding claims in which the shank (2) comprises longitudinally spaced ribs (12) for engagement with the margin of a hole in the spring (40).

8. A fastening device as claimed in any one of the preceding claims in situ in a hole (3), the spring (40) urging the shank (2) out of the hole (3).

9. A fastening device as claimed in any preceding claim in situ fastening together two metallic components of an automotive engine.

## Patentansprüche

1. Befestigungsvorrichtung zum Halt in einer Öffnung (3) mit einem länglichen Schaft (2) mit einem Kopf (10) und einem Gewindeteil (16) in Schraubengewinde-Eingriff mit einem zylindrischen Halteelement (20), in zumindest einem Teil dessen Außenfläche eine ringförmige Ausnehmung (24) ist, deren Tiefe sich in die Richtung hin zum Kopf (10) erhöht, wobei die Ausnehmung (24) ein dehnbares Element (30) aufnimmt, dessen Innenfläche an der Fläche der Ausnehmung (24) angreift und das über die Ausnehmung (24) hinausragt, **dadurch gekennzeichnet, dass** die Befestigungsvorrichtung weiters eine Feder (40) aufweist, die in den Schaft (2) in der Nähe des Kopfes (10) eingreift, die angepasst ist, um am Rand der Öffnung (3) anzugreifen und den Schaft (2) in Richtung aus der Öffnung heraus zu drängen.

2. Befestigungsvorrichtung nach Anspruch 1, wobei das dehnbare Element (30) ein Metallring ist.

3. Befestigungsvorrichtung nach Anspruch 2, wobei der Ring (30) einen Spaltring aufweist.

4. Befestigungsvorrichtung nach einem der vorhergehenden Ansprüche, wobei die Fläche der Ausnehmung (24) kegelstumpfförmig ist.

5. Befestigungsvorrichtung nach Anspruch 2, wobei die Innenfläche des Rings (30) kegelstumpfförmig und komplementär zur Fläche der Ausnehmung (24) ist.

6. Befestigungsvorrichtung nach Anspruch 3, wobei der äußere Rand des Rings (30), der am Ende zum Kopf (10) hin gerichtet ist, von zwei Flächen definiert ist, die sich mit weniger als 90°C zueinander erstrecken.

7. Befestigungsvorrichtung nach einem der vorhergehenden Ansprüche, wobei der Schaft (2) längswärts beabstandete Rippen (12) zum Angriff am Rand einer Öffnung in der Feder (40) aufweist.

8. Befestigungsvorrichtung nach einem der vorhergehenden Ansprüche in situ in einer Öffnung (3), wobei die Feder (40) den Schaft (2) aus der Öffnung (3) herausdrängt.

9. Befestigungsvorrichtung nach einem der vorhergehenden Ansprüche, die in situ zwei metallische Komponenten eines Automobilmotors miteinander befestigt.

## Revendications

1. Dispositif de fixation pour retenue dans un trou (3), comprenant une tige allongée (2) avec une tête (10) et une portion filetée (16) en engagement de vissage avec un élément de retenue cylindrique (20), dont au moins une partie de la surface externe présente un évidement annulaire (24) dont la profondeur augmente en direction de la tête (10), cet évidement (24) recevant un élément expansible (30) dont la surface interne s'engage sur la surface de l'évidement (24) et qui s'étend hors de l'évidement (24), **caractérisé en ce que** le dispositif de fixation présente en outre un ressort (40) en prise sur la tige (2), à proximité de la tête (10), qui est configuré pour s'engager sur le bord du trou (3) et presser la tige (2) hors du trou.

2. Dispositif de fixation selon la revendication 1, dans lequel l'élément expansible (30) est un anneau métallique.

3. Dispositif de fixation selon la revendication 2, dans lequel l'anneau (30) comprend un anneau divisé.

4. Dispositif de fixation selon l'une quelconque des revendications précédentes, dans lequel la surface de l'évidement (24) est tronconique.

5. Dispositif de fixation selon la revendication 2, dans lequel la surface interne de l'anneau (30) est tronconique et complémentaire de la surface de l'évidement (24).

6. Dispositif de fixation selon la revendication 3, dans lequel le bord externe de l'anneau (30) à l'extrémité dirigée vers la tête (10) est défini par deux surfaces qui s'étendent à moins de 90 ° l'une par rapport à l'autre.

7. Dispositif de fixation selon l'une quelconque des revendications précédentes, dans lequel la tige (2) comprend des nervures espacées longitudinalement (12) destinées à s'engager sur le bord d'un trou dans le ressort (40).

8. Dispositif de fixation selon l'une quelconque des revendications précédentes in situ dans un trou (3), le ressort (40) pressant la tige (2) hors du trou.

9. Dispositif de fixation selon l'une quelconque des revendications précédentes fixant in situ ensemble deux composants métalliques d'un moteur d'automobile.
